# EUROPEAN PATENT APPLICATION

(11) **EP 3 984 821 A1**
(43) Date of publication of application: **20.04.2022**
(21) Application number: 20900714.5
(22) Date of filing: 10.12.2020
(51) Int. Cl.: B60Q 3/80, B60R 16/037, B60Q 1/50, B60Q 1/30

(54) **VEHICLE LIGHT CONTROL METHOD AND CONTROL APPARATUS, AND STORAGE MEDIUM**

(30) Priority: 17.08.2020 CN 202010827899
(71) Applicant: Guangzhou Chengxing Zhidong Motors Technology Co., Ltd., Guangzhou, Guangdong 510700 (CN); Guangzhou Xiaopeng Motors Technology Co., Ltd., Guangzhou, Guangdong 510630 (CN)
(72) Inventor: LI, Rong, Guangzhou, Guangdong 510700 (CN); CHI, Huating, Guangzhou, Guangdong 510700 (CN)
(74) Representative: Isarpatent
(86) International application number: PCT/CN2020/135137
(87) International publication number: WO 2022/036945

(57) **Abstract**

The present application discloses a controlling method of a car lamp. The controlling method includes: acquiring musical-composition information of a current music track; and controlling the car lamp to exhibit a lamp-signal effect by using corresponding light emitting region and lightening time periods according to the musical-composition information. In the controlling method of a car lamp according to the embodiments of the present application, by acquiring musical-composition information of a current music track, the car lamp is controlled to start up the operation by using the corresponding light emitting region and lightening time periods according to the musical-composition information, which can realize the corresponding lamp-signal effects according to different music tracks, with a high degree of intellectualization. In some scenes of recreation or amusement, the present application adds the enjoyment, and has a better user experience. The present application further discloses a controlling device of a car lamp and a computer readable storage medium.

## Description

### CROSS REFERENCE TO RELEVANT APPLICATIONS

The present application claims the priority of the Chinese patent application filed on August 17th, 2020 before the Chinese Patent Office with the application number of CN202010827899.X and the title of "CONTROLLING METHOD AND DEVICE OF CAR LAMP AND STORAGE MEDIUM", which is incorporated herein in its entirety by reference.

### TECHNICAL FIELD

The present application relates to the technical field of vehicles, and particularly relates to a controlling method and device of a car lamp and a storage medium.

### BACKGROUND

Currently, car lamps in the market are mainly used to realize the basic function of illumination and realize a simple function of dynamic lamp signal in fixed working conditions, and the function of dynamic lamp signal cannot be replaced or adjusted, and has a simple function and a poor degree of intellectualization.

### SUMMARY

In view of the above, the embodiments of the present application provide a controlling method and device of a car lamp and a storage medium.

The present application provides a controlling method of a car lamp, wherein the controlling method comprises:
acquiring musical-composition information of a current music track; and
controlling the car lamp to exhibit a lamp-signal effect by using corresponding light emitting region and lightening time periods according to the musical-composition information.

In some embodiments, the step of acquiring the musical-composition information of the current music track comprises:
parsing sound-source information of the current music track; and
acquiring the musical-composition information according to the sound-source information.

In some embodiments, the car lamp comprises a through-type light strip, the through-type light strip comprises a plurality of lamp beads, and the step of controlling the car lamp to exhibit the lamp-signal effect by using the corresponding light emitting region and lightening time periods according to the musical-composition information comprises:
according to musical-note information forming the current music track, matching a pre-displayed coding schedule; and
according to the coding schedule, determining light emitting lamp beads in the through-type light strip.

In some embodiments, the step of controlling the car lamp to exhibit the lamp-signal effect by using the corresponding light emitting region and lightening time periods according to the musical-composition information comprises:
at a rest of the current music track, controlling the through-type light strip to turn off.

In some embodiments, the musical-composition information comprises melody information, and the step of controlling the car lamp to exhibit the lamp-signal effect by using the corresponding light emitting region and lightening time periods according to the musical-composition information comprises:
according to the melody information, determining a duration of each of musical notes in the current music track; and
according to the duration, determining a lightening time period of each of the light emitting lamp beads.

In some embodiments, the controlling method further comprises:
according to the melody information, determining a pitch of the current music track;
according to the pitch, determining brightnesses of the light emitting lamp beads; and
controlling the light emitting lamp beads to exhibit the lamp-signal effect by using corresponding brightnesses.

In some embodiments, the controlling method further comprises:
determining whether a vehicle is in a predetermined state, to detect whether the vehicle satisfies a triggering condition for exhibiting the lamp-signal effect; and
when the triggering condition is satisfied, acquiring the musical-composition information of the current music track.

In some embodiments, the controlling method further comprises:
determining whether the current music track has a preset lamp-signal effect;
when the current music track has the preset lamp-signal effect, exhibiting the preset lamp-signal effect; and
when the current music track does not have the preset lamp-signal effect, acquiring the musical-composition information of the current music track.

The present application provides a controlling device of a car lamp, wherein the controlling device comprises:
an acquiring module configured for acquiring musical-composition information of a current music track; and
a controlling module configured for controlling the car lamp to exhibit a lamp-signal effect by using corresponding light emitting region and lightening time periods according to the musical-composition information.

The present application provides one or more nonvolatile computer-readable storage mediums storing a computer program, wherein when the computer program is executed by one or more processors, the computer program implements the controlling method of a car lamp stated above.

In the controlling method and device of a car lamp and the storage medium according to the embodiments of the present application, by acquiring musical-composition information of a current music track, the car lamp is controlled to start up the operation by using the corresponding light emitting region and lightening time periods according to the musical-composition information, which can realize the corresponding lamp-signal effects according to different music tracks, with a high degree of intellectualization. In some scenes of recreation or amusement, the present application adds the enjoyment, and has a better user experience.

### BRIEF DESCRIPTION OF THE DRAWINGS

The above and/or additional aspects and advantages of the present application will become apparent and readily understandable from the following description on the embodiments with respect to the drawings. in the drawings:
Fig. 1 is a schematic flow chart of the controlling method of a car lamp according to some embodiments of the present application.
Fig. 2 is a schematic structural diagram of the vehicle according to some embodiments of the present application.
Fig. 3 is a schematic module diagram of the controlling device of a car lamp according to some embodiments of the present application.
Fig. 4 is a schematic flow chart of the controlling method of a car lamp according to some embodiments of the present application.
Fig. 5 is a schematic flow chart of the controlling method of a car lamp according to some embodiments of the present application.
Fig. 6 is a schematic diagram of the car lamp according to some embodiments of the present application.
Fig. 7 is a schematic diagram of the coding schedule according to some embodiments of the present application.
Fig. 8 is a schematic flow chart of the controlling method of a car lamp according to some embodiments of the present application.
Fig. 9 is a schematic flow chart of the controlling method of a car lamp according to some embodiments of the present application.
Fig. 10 is a schematic flow chart of the controlling method of a car lamp according to some embodiments of the present application.
Fig. 11 is a schematic flow chart of the controlling method of a car lamp according to some embodiments of the present application.
Fig. 12 is a schematic flow chart of the controlling method of a car lamp according to some embodiments of the present application.

### DETAILED DESCRIPTION

The embodiments of the present application will be described in detail below, and the examples of the embodiments are illustrated in the drawings, wherein the same or similar reference numbers throughout the drawings indicate the same or similar elements or elements having the same or similar functions. The embodiments described below with reference to the drawing are exemplary, are intended to interpret the present application, and should not be construed as a limitation on the present application.

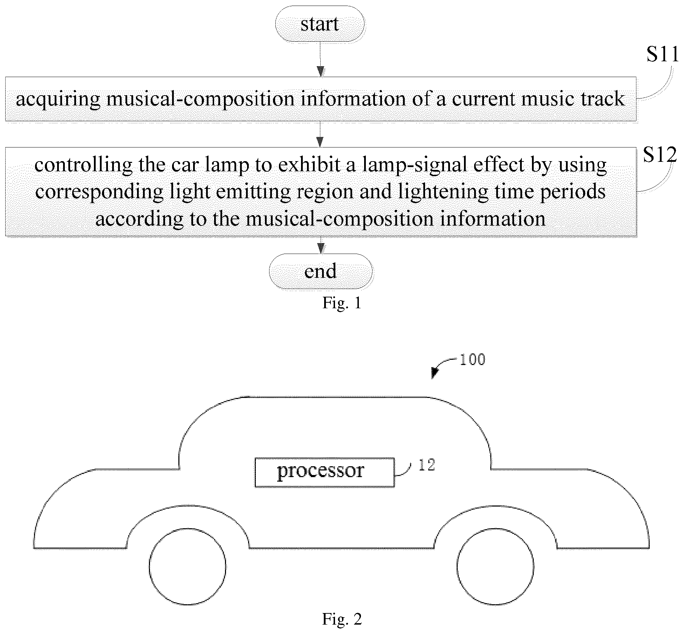

Referring to Fig. 1, the present application provides a controlling method of a car lamp, comprising:
S11: acquiring musical-composition information of a current music track; and
S12: controlling the car lamp to exhibit a lamp-signal effect by using corresponding light emitting region and lightening time periods according to the musical-composition information.

Referring to Fig. 2, an embodiment of the present application provides a vehicle 100. The vehicle 100 comprises a processor 12. The processor 12 is configured for acquiring musical-composition information of a current music track, and configured for controlling the car lamp to exhibit a lamp-signal effect by using corresponding light emitting region and lightening time periods according to the musical-composition information. The processor 12 may be a processor 12 independently provided for controlling the state of the car lamp, and may also be the processor 12 of the travelling system of the vehicle, which is not limited here.

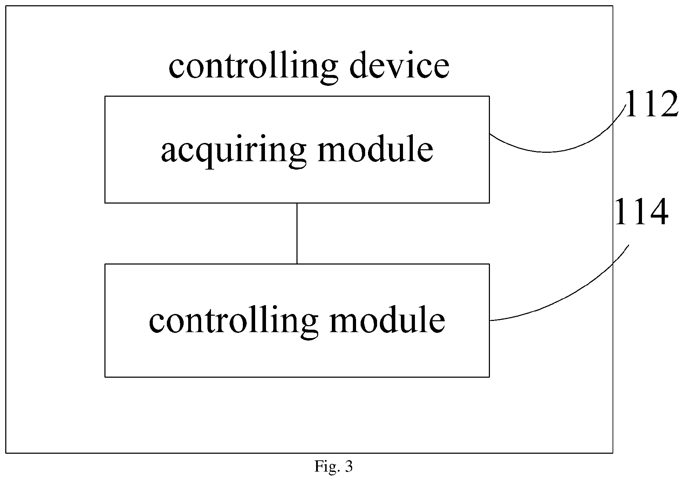

Referring to Fig. 3, an embodiment of the present application further provides a controlling device 110 of a car lamp, and the controlling method of a car lamp according to the embodiments of the present application may be implemented by using the controlling device 110. The controlling device 110 comprises an acquiring module 112 and a controlling module 114. S11 may be implemented by the acquiring module 112, and S12 may be implemented by the controlling module 114. In other words, the acquiring module 112 is configured for acquiring musical-composition information of a current music track. The controlling module 114 is configured for controlling the car lamp to exhibit a lamp-signal effect by using corresponding light emitting region and lightening time periods according to the musical-composition information.

Particularly, in some scenes of recreation or amusement, such as camping, picnicking, outdoor party and guest treatment, when the user has started up an onboard audio device to play music, if the car lamp can be controlled to exhibit a corresponding lamp-signal effect that cooperates with the music, that can add more enjoyment, and optimize the user experience.

Further, by acquiring the musical-composition information of the current music track in the playing of the music, according to the correspondence relation between the musical-composition information and the lamp-signal effect, the car lamp can be controlled to exhibit the corresponding lamp-signal effect. The musical-composition information may be the music score of the music track, such as a numbered musical notation, a stave and a touch melody. The correspondence relation between the musical-composition information and the lamp-signal effect may be preset by the vehicle manufacturer in the vehicle production process; may be set by the user according to the personal favorite and style in the process of the usage of an onboard amusement system by the user; may be the combination of the above-described two modes; and may be a correspondence relation obtained by a server analyzing in advance the user behavior to obtain a database and matching with the data in the database, and so on. The particular mode is not limited.

In some embodiments, the vehicle manufacturer, in the vehicle production process, presets the correspondence relation between the musical-composition information and the lamp-signal effect. Accordingly, when the user is firstly playing the music track, it is not required to input manually a preset correspondence relation, and the vehicle can control the car lamp according to the musical-composition information to exhibit the lamp-signal effect, which optimize the user experience.

In some embodiments, the user is required to set the correspondence relation between the musical-composition information and the lamp-signal effect according to the personal favorite and style, which can enable the exhibition mode of the lamp-signal effect to more meet the habit of the user.

In other embodiments, the correspondence relation between the musical-composition information and the lamp-signal effect is preset by the vehicle manufacturer in the vehicle production process, and the user may customize it when using the onboard amusement system. That can combine the advantageous effects of the above-described two modes. On one hand, before the user has not set the correspondence relation between the musical-composition information and the lamp-signal effect, the lamp-signal effect can be exhibited. On the other hand, if the user requires to customize the correspondence relation between the musical-composition information and the lamp-signal effect, he can set it himself, which enables the exhibition mode of the lamp-signal effect to more meet the habit of the user.

In the controlling method and device 110 of a car lamp and the vehicle 100 according to the embodiments of the present application, by acquiring musical-composition information of a current music track, the car lamp is controlled to start up the operation by using the corresponding light emitting region and lightening time periods according to the musical-composition information, which can realize the corresponding lamp-signal effects according to different music tracks, with a high degree of intellectualization. In some scenes of recreation or amusement, the present application adds the enjoyment, and has a better user experience.

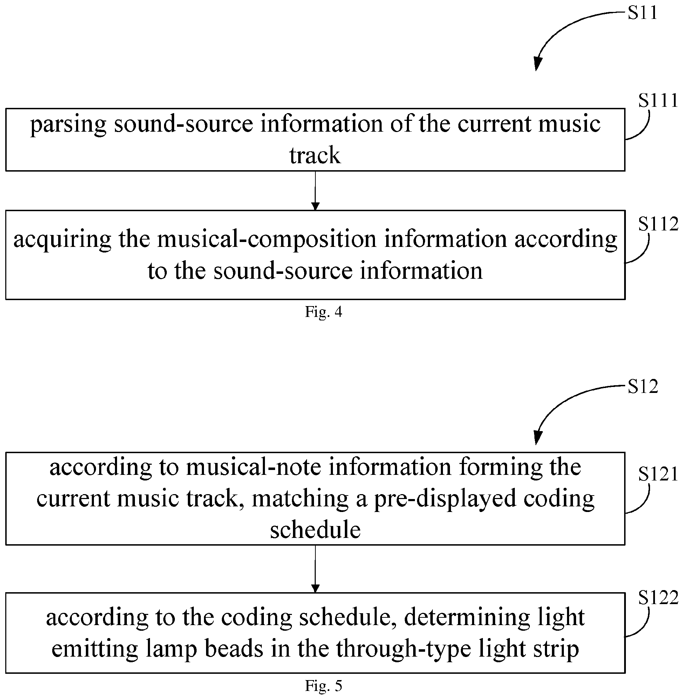

Referring to Fig. 4, in some embodiments, S11 comprises:
S111: parsing sound-source information of the current music track; and
S112: acquiring the musical-composition information according to the sound-source information.

In some embodiments, Sill and S112 may be implemented by the acquiring module 112. In other words, the acquiring module 112 is configured for parsing sound-source information of the current music track, and configured for acquiring the musical-composition information according to the sound-source information.

In some embodiments, the processor 12 is configured for parsing sound-source information of the current music track, and configured for acquiring the musical-composition information according to the sound-source information.

Particularly, the musical-composition information of the currently played music track may be obtained by parsing its sound-source information. The sound-source information of the music track may include the song name, the song singer, the lyricist, the track writer, the album, the genre and so on. The musical-composition information may be the music score of the music track, such as a numbered musical notation, a stave and a touch melody.

The vehicle, by parsing sound-source information of the current music track, obtains the musical-composition information of the current music track, and, according to the musical-composition information, controls the car lamp to exhibit the corresponding lamp-signal effect.

In some embodiments, By parsing the current music track, the sound-source information of the current music track is obtained, including the track name, the composer and the lyricist, the musical-composition information, i.e., the numbered musical notation of the musical composition, is obtained according to the sound-source information, and the vehicle, according to the musical-composition information, controls the car lamp to exhibit by using the corresponding light emitting region and lightening time periods.

Accordingly, the present application can realize the corresponding lamp-signal effects according to different music tracks, with a high degree of intellectualization, and a better user experience.

Referring to Fig. 5, in some embodiments, the car lamp comprises a through-type light strip, the through-type light strip comprises a plurality of lamp beads, and S12 comprises:
S121: according to musical-note information forming the current music track, matching a pre-displayed coding schedule; and
S122: according to the coding schedule, determining light emitting lamp beads in the through-type light strip.

In some embodiments, S121 and S122 may be implemented by the controlling module 114. In other words, the controlling module 114 is configured for, according to musical-note information forming the current music track, matching a pre-displayed coding schedule, and configured for, according to the coding schedule, determining light emitting lamp beads in the through-type light strip.

In some embodiments, the processor 12 is configured for, according to musical-note information forming the current music track, matching a pre-displayed coding schedule, and configured for, according to the coding schedule, determining light emitting lamp beads in the through-type light strip.

Particularly, the car lamp comprises a through-type light strip, for example, a head through-type light strip, a tail through-type light strip, or a continuous-light-strip assembly that is formed by a head through-type light strip and a tail through-type light strip and extends throughout the vehicle.

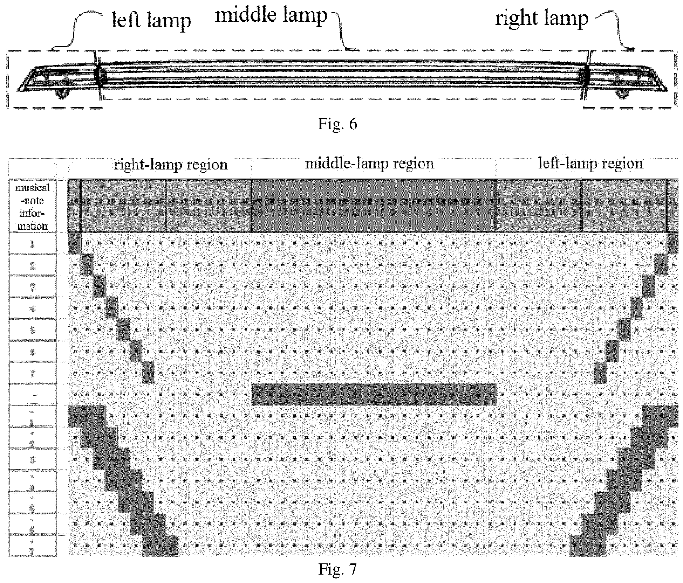

Referring to Fig. 6, in some embodiments, the car lamp comprises a head through-type light strip and a tail through-type light strip. The head through-type light strip may comprise a left-lamp region, a middle-lamp region and a right-lamp region. Each of the left-lamp region and the right-lamp region may have 24 lamp beads evenly distributed therein. The middle-lamp region may have 48 lamp beads evenly distributed therein. The 24 lamp beads in the left-lamp region of the head through-type light strip may be numbered by using 1 to 24 in a sequence from left to right or from right to left. The lamp beads in the middle-lamp region and the right-lamp region of the head through-type light strip may be numbered in the similar manner.

Similarly, the tail through-type light strip may comprise a left-lamp region, a middle-lamp region and a right-lamp region, and the quantities of the lamp beads in the tail through-type light strip may be equal to the quantities of the lamp beads in the head through-type light strip. The lamp beads in the tail through-type light strip may be numbered in the manner in which the lamp beads in the head through-type light strip are numbered.

The vehicle can, according to the correspondence relation between the musical-composition information of the current music track and the lamp-signal effect, determine the correspondence relation between the musical-note information and the light emitting lamp beads. The musical-note information may be the musical notes in the musical-composition information, such as the various musical notes in a numbered musical notation or the various musical notes in a stave. The vehicle matches a pre-displayed coding schedule according to the musical-note information of the current music track, and determines the light emitting lamp beads in the through-type light strip according to the coding schedule, thereby determining the correspondence relation between the musical-note information and the light emitting lamp beads.

Referring to Fig. 7, for example, when the musical-note information in the musical-composition information of the current music track is the "1" or Middle C "Do" in a numbered musical notation, the information in the coding schedule is matched that: controlling the lamp beads of the serial number 1 in the left-lamp region and the right-lamp region of the through-type light strip to emit light, and the lamp beads of the other serial numbers to maintain the turned-off state. The vehicle, according to the information in the coding schedule, controls the lamp beads of the serial number 1 in the left-lamp region and the right-lamp region to brighten up.

As another example, when the musical-note information in the musical-composition information of the current music track is the "1" lifted by an ottava or C5 "Do" in a numbered musical notation, the information in the coding schedule is matched that: controlling the lamp beads of the serial numbers 1, 2 and 3 in the left-lamp region and the right-lamp region of the through-type light strip to emit light, and the lamp beads of the other serial numbers to maintain the turned-off state. The vehicle, according to the information in the coding schedule, controls the lamp beads of the serial numbers 1, 2 and 3 in the left-lamp region and the right-lamp region to brighten up.

Referring again to Fig. 7, in some embodiments, the musical-composition information obtained according to the sound-source information is a numbered musical notation of the music track, and when the music has been played to a tie in the numbered musical notation, the information in the coding schedule is matched that: controlling all of the lamp beads in the middle-lamp region of the through-type light strip to lighten. The vehicle, according to the information in the coding schedule, controls all of the lamp beads in the middle-lamp region to brighten up.

The musical-note information in the musical-composition information and the light emitting lamp beads in the through-type light strip have established a correspondence relation, in the playing of the music track, the lamp beads corresponding to the current musical-note information are controlled to emit light, and the other lamp beads are controlled to maintain the turned-off state. Accordingly, in the playing of the music track, the corresponding lamp-signal effect can be exhibited, which improves the degree of intellectualization of the car lamp, and increases the enjoyment of the lamp-signal effect.

It should be noted that the region division of the through-type light strip includes but is not limited to the above division modes, and the particular division modes may be determined according to the factors such as the vehicle design and the musical-composition information, and are not limited herein. For example, the through-type light strip may also be divided into 1, 3, 5 or 7 regions and so on. The correspondence relation between the musical-note information and the light emitting lamp beads includes but is not limited to the above correspondence relations, and it may particularly be set according to the factors such as the quantity and the types of the lamp beads and the type and the amount of the musical-note information, and may also be customized by the user, which is not limited herein.

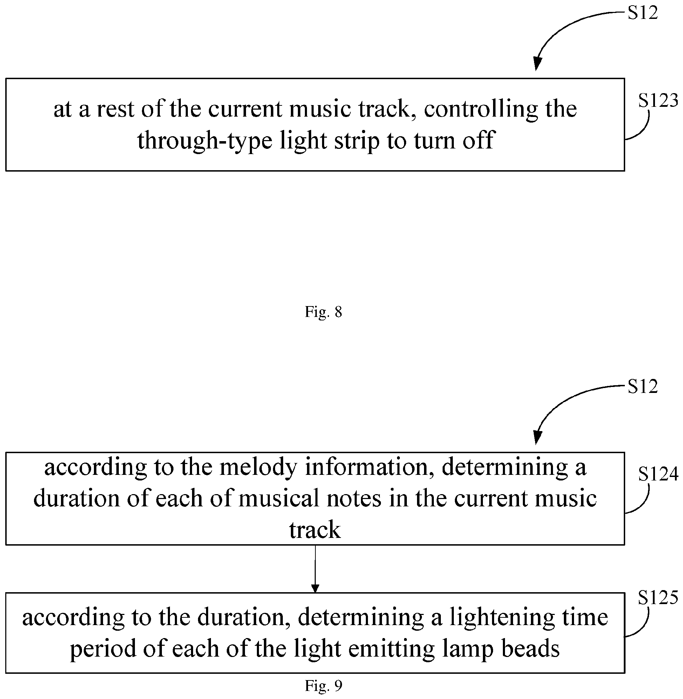

Referring to Fig. 8, in some embodiments, S12 comprises:
S123: at a rest of the current music track, controlling the through-type light strip to turn off.

In some embodiments, S123 may be implemented by the controlling module 114. In other words, the controlling module 114 is configured for, at a rest of the current music track, controlling the through-type light strip to turn off.

In some embodiments, the processor 12 is configured for, at a rest of the current music track, controlling the through-type light strip to turn off.

Particularly, if the musical-note information of the current music track comprises a rest, at the rest of the music track, the information corresponding to the rest in the coding schedule may be set to be: controlling all of the lamp beads in the through-type light strip to turn off. It can be understood that, when the musical-note information is a rest, the musical instrument does not emit sound, and, at this point, controls the lamp beads in the through-type light strip to maintain the turned-off state meets the ordinary practice of common users.

Moreover, the user may also customize the correspondence relation between the musical-note information and the light emitting lamp beads during the usage. For example, the user may set that, when the musical-note information is a rest, all of the light emitting lamp beads in the through-type light strip maintain the lightened state.

Accordingly, in the playing of the music track, the corresponding lamp-signal effect can be exhibited, which improves the degree of intellectualization of the car lamp, and increases the enjoyment of the lamp-signal effect.

Referring to Fig. 9, in some embodiments, the musical-composition information comprises melody information, and S12 comprises:
S124: according to the melody information, determining a duration of each of musical notes in the current music track; and
S125: according to the duration, determining a lightening time period of each of the light emitting lamp beads.

In some embodiments, S124 and S125 may be implemented by the controlling module 114. In other words, the controlling module 114 is configured for, according to the melody information, determining a duration of each of musical notes in the current music track, and configured for, according to the duration, determining a lightening time period of each of the light emitting lamp beads.

In some embodiments, the processor 12 is configured for, according to the melody information, determining a duration of each of musical notes in the current music track, and configured for, according to the duration, determining a lightening time period of each of the light emitting lamp beads.

Particularly, the playing of the music track comprises playing the musical-note information and the melody information in the musical-composition information, i.e., playing the musical notes by using a certain melody. The melody information may comprise pitch information and rhythm information. The rhythm information may be a whole note, a half note, a quarter note, an eighth note, a sixteenth note, a thirty-second note and so on. The duration of each of the musical notes is determined according to the rhythm information in the melody information in the musical-composition information, and the lightening time period of each of the light emitting lamp beads is determined according to the duration of the musical note; in other words, the lightening time periods of the light emitting lamp beads reflect the durations of the musical notes. Accordingly, in some scenes of recreation or amusement, the present application can add the enjoyment, and have a better user experience.

As shown in the following table, for example, if the rhythm information in the melody information of the current music track is a whole note, or, in other words, the musical-note duration is quadruple beat, in that case, the lightening time period of each of the light emitting lamp beads may be controlled to be 1 second. As another example, if the rhythm information in the melody information of the current music track is a half note, or, in other words, the musical-note duration is duple beat, in that case, the lightening time period of each of the light emitting lamp beads may be controlled to be 0.5 second. As another example, if the rhythm information in the melody information of the current music track is a quarter note, or, in other words, the musical-note duration is one beat, in that case, the lightening time period of each of the light emitting lamp beads may be controlled to be 0.25 second. The rest may be done in the same manner.

| melody information | musical-note duration | lightening time period |
|---|---|---|
| whole note | quadruple beat | 1 second |
| half note | duple beat | 0.5 second |
| quarter note | one beat | 0.25 second |
| eighth note | half beat | 0.125 second |
| sixteenth note | quarter beat | 0.0625 second |
| thirty-second note | eighth beat | 0.03125 second |

It should be noted that the correspondence relation between the musical-note duration and the lightening time period of the light emitting lamp bead includes but is not limited to the above correspondence relations, and it may particularly be set according to the factors such as the quantity and the types of the lamp beads and the habit of the user, which is not limited herein.

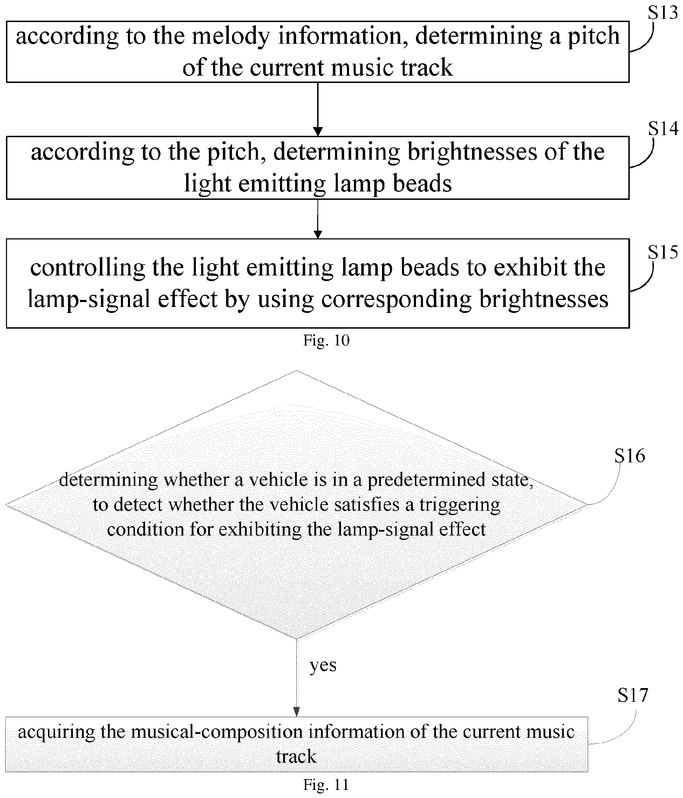

Referring to Fig. 10, in some embodiments, the controlling method further comprises:
S13: according to the melody information, determining a pitch of the current music track;
S14: according to the pitch, determining brightnesses of the light emitting lamp beads; and
S15: controlling the light emitting lamp beads to exhibit the lamp-signal effect by using corresponding brightnesses.

In some embodiments, S13-S15 may be implemented by the controlling module 114. In other words, the controlling module 114 is configured for, according to the melody information, determining a pitch of the current music track, configured for, according to the pitch, determining brightnesses of the light emitting lamp beads, and configured for controlling the light emitting lamp beads to exhibit the lamp-signal effect by using corresponding brightnesses.

In some embodiments, the processor 12 is configured for, according to the melody information, determining a pitch of the current music track, configured for, according to the pitch, determining brightnesses of the light emitting lamp beads, and configured for controlling the light emitting lamp beads to exhibit the lamp-signal effect by using corresponding brightnesses.

Particularly, the melody information may comprise pitch information and rhythm information. In the playing of the music track, the pitch is determined according to the pitch information in the melody information, and the brightnesses of the light emitting lamp beads are determined according to the pitch; in other words, the brightnesses of the light emitting lamp beads reflect the pitches. The correspondence relation between the pitch and the brightnesses of the light emitting lamp beads may be that C4 corresponds to one basic brightness, and the basic brightness is adjusted according to the variation amplitudes of the pitches, and may also be that each of the levels of the pitches constantly corresponds to one brightness. The particular correspondence relation is not limited.

In some embodiments, when the pitch information in the melody information of the current music track is C4, the basic brightnesses of the light emitting lamp beads are determined, and in that case, the brightness of each of the light emitting lamp beads may be controlled to be 50*%*. On the basis of that, every time it is lifted by one octave, the brightness of the light emitting lamp bead is controlled to increase by 10*%*, and every time it is lowered by one octave, the brightness of the light emitting lamp bead is controlled to decrease by 10*%*.

In other embodiments, when the pitch information in the melody information of the current music track is C3, the brightness of the light emitting lamp bead is determined to be 50*%*. When the pitch information in the melody information of the current music track is C4, the brightness of the light emitting lamp bead is determined to be 60*%*. When the pitch information in the melody information of the current music track is C5, the brightness of the light emitting lamp bead is determined to be 70*%*.

Accordingly, in some scenes of recreation or amusement, the present application can add the enjoyment, and have a better user experience.

Referring to Fig. 11, in some embodiments, the controlling method further comprises:
S16: determining whether a vehicle is in a predetermined state, to detect whether the vehicle satisfies a triggering condition for exhibiting the lamp-signal effect; and
S17: when the triggering condition is satisfied, acquiring the musical-composition information of the current music track.

In some embodiments, S16 and S17 may be implemented by the controlling module 114. In other words, the controlling module 114 is configured for determining whether a vehicle is in a predetermined state, to detect whether the vehicle satisfies a triggering condition for exhibiting the lamp-signal effect, and configured for, when the triggering condition is satisfied, acquiring musical-composition information of a current music track.

In some embodiments, the processor 12 is configured for determining whether a vehicle is in a predetermined state, to detect whether the vehicle satisfies a triggering condition for exhibiting the lamp-signal effect, and configured for, when the triggering condition is satisfied, acquiring musical-composition information of a current music track.

Particularly, in the travelling of the vehicle, the different states of the car lamp correspond to different lamp signals, and if, in the travelling, the function of the lamp signal according to the present embodiment is started up, that might affect the normal driving of other vehicles in the road, or even cause a traffic accident. Therefore, the function of lamp signal according to the present embodiment is provided with a triggering condition, and, when the vehicle satisfies the triggering condition, the musical-composition information of the current music track is acquired, and the car lamp is controlled to exhibit the corresponding lamp-signal effect by using the corresponding light emitting region and lightening time periods according to the musical-composition information, which cannot only exhibit a certain joy effect, but can also prevent affecting the safety in travelling.

Optionally, the triggering condition of exhibiting the lamp-signal effect includes but is not limited to: the vehicle is in a predetermined state, and is currently playing music; or the vehicle is in a predetermined state, the duration of opening of the car door of the vehicle is greater than or equal to a preset duration, and is currently playing music; or the vehicle is in a predetermined state, the vehicle is located at a preset location, and is currently playing music; and so on.

The predetermined state of the vehicle includes but is not limited to: the vehicle is in a static state; or the gear of the vehicle is in a stop mark, the vehicle is not in a ready-for-starting-up state, and both of the daytime running lights and the parking lights are turned off; or the gear of the vehicle is in a stop mark, the vehicle is in a ready-for-starting-up state, and the body control model sets the daytime running lights and the parking lights to be in the turned-off state; and so on. The preset location may include a landmark location such as a beach, a mountain top, a camping area and a park, and various customizable locations. The customizable location is a location that the user himself sets, for example, the residence area of a specific person, the perimeter zone of a specific construction, and so on.

In some embodiments, the gear of the vehicle is in a stop mark, the vehicle is not in a ready-for-starting-up state, and both of the daytime running lights and the parking lights are turned off. In that case, if the user controls the vehicle to play music, then the vehicle satisfies the triggering condition of exhibiting the lamp-signal effect, and the vehicle acquires the musical-composition information of the current music track, and, according to the musical-composition information, controls the car lamp to exhibit the corresponding lamp-signal effect by using the corresponding light emitting region and lightening time periods.

In other embodiments, the vehicle is in the travelling state. In that case, if the user controls the vehicle to play music, because the vehicle does not satisfy the triggering condition of exhibiting the lamp-signal effect, it does not control the car lamp to exhibit the lamp-signal effect.

Accordingly, the present application cannot only exhibit a certain joy effect, but can also prevent affecting the safety in travelling.

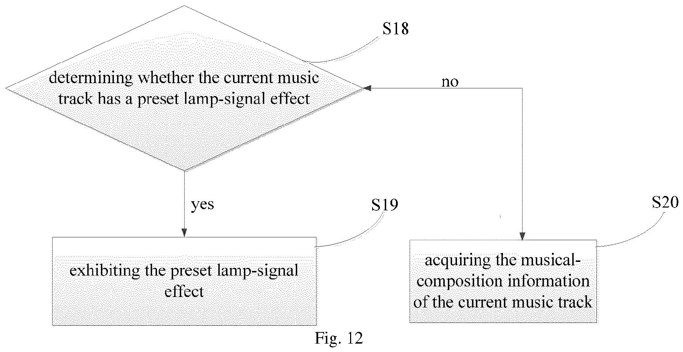

Referring to Fig. 12, in some embodiments, the controlling method further comprises:
S18: determining whether the current music track has a preset lamp-signal effect;
S19: when the current music track has the preset lamp-signal effect, exhibiting the preset lamp-signal effect; and
S20: when the current music track does not have the preset lamp-signal effect, acquiring the musical-composition information of the current music track.

In some embodiments, S18-S20 may be implemented by the controlling module 114. In other words, the controlling module 114 is configured for determining whether the current music track has a preset lamp-signal effect, configured for, when the current music track has the preset lamp-signal effect, exhibiting the preset lamp-signal effect, and configured for, when the current music track does not have a preset lamp-signal effect, acquiring the musical-composition information of the current music track.

In some embodiments, the processor 12 is configured for determining whether the current music track has a preset lamp-signal effect, configured for, when the current music track has the preset lamp-signal effect, exhibiting the preset lamp-signal effect, and configured for, when the current music track does not have a preset lamp-signal effect, acquiring the musical-composition information of the current music track.

Particularly, in the playing of the current music track, it is determined whether the current music track has the lamp-signal effect preset by the user. If it has the lamp-signal effect preset by the user, then the lamp-signal effect preset by the user is exhibited. If it does not have the lamp-signal effect preset by the user, then the musical-composition information of the current music track is acquired, and, according to the musical-composition information, the car lamp is controlled to exhibit the corresponding lamp-signal effect by using the corresponding light emitting region and lightening time periods.

In some embodiments, the user has set the corresponding lamp-signal effect according to the personal favorite and style. Accordingly, in the playing of the current music track, the lamp-signal effect preset by the user is exhibited.

In other embodiments, the user does not preset the lamp-signal effect. Accordingly, the musical-composition information of the current music track is acquired, and, according to the musical-composition information, according to a generally set lamp-signal effect, the car lamp is controlled to exhibit by using the corresponding light emitting region and lightening time periods.

Accordingly, on one hand, the present application can, when the user has not set the lamp-signal effect, exhibit the lamp-signal effect according to the general setting. On the other hand, if the user requires to customize the lamp-signal effect, he can set it himself, which can enable the exhibition mode of the lamp-signal effect to more meet the habit of the user.

An embodiment of the present application further provides a computer-readable storage medium. An embodiment of the present application further provides one or more nonvolatile computer-readable storage mediums storing a computer program, wherein when the computer program is executed by one or more processors, the computer program implements the controlling method of a car lamp according to any one of the above embodiments.

An embodiment of the present application further provides a vehicle. The vehicle comprises a memory and one or more processors, and one or more programs are stored in the memory, and are configured for being executed by the one or more processors. The programs contain an instruction for implementing the controlling method of a car lamp according to any one of the above embodiments.

The processors may be used for providing the capacity of calculation and controlling, to support the operation of the entire vehicle. The memory of the vehicle provides the environment for the operation of a computer-readable code in the memory.

A person skilled in the art can understand that all or some of the processes of the methods according to the above embodiments may be implemented by relative hardware according to an instruction from a computer program, the program may be stored in a nonvolatile computer-readable storage medium, and the program, when executed, may contain the processes of the embodiments of the method stated above. The storage medium may be a diskette, an optical disc, a Read-Only Memory (ROM) and so on.

The above embodiments merely describe some embodiments of the present application, and although they are particularly and in detail described, they cannot be accordingly understood as limiting the patent scope of the present application. It should be noted that a person skilled in the art may make variations and improvements without departing from the concept of the present application, all of which fall within the protection scope of the present application. Therefore, the patent protection scope of the present application should be subject to the appended claims.

## Claims

1. A controlling method of a car lamp, **characterised in that** the controlling method comprises:
acquiring musical-composition information of a current music track; and
controlling the car lamp to exhibit a lamp-signal effect by using corresponding light emitting region and lightening time periods according to the musical-composition information.

2. The controlling method according to claim 1, wherein the step of acquiring the musical-composition information of the current music track comprises:
parsing sound-source information of the current music track; and
acquiring the musical-composition information according to the sound-source information.

3. The controlling method according to claim 1, wherein the car lamp comprises a through-type light strip, the through-type light strip comprises a plurality of lamp beads, and the step of controlling the car lamp to exhibit the lamp-signal effect by using the corresponding light emitting region and lightening time periods according to the musical-composition information comprises:
according to musical-note information forming the current music track, matching a pre-displayed coding schedule; and
according to the coding schedule, determining light emitting lamp beads in the through-type light strip.

4. The controlling method according to claim 3, wherein the step of controlling the car lamp to exhibit the lamp-signal effect by using the corresponding light emitting region and lightening time periods according to the musical-composition information comprises:
at a rest of the current music track, controlling the through-type light strip to turn off.

5. The controlling method according to claim 3, wherein the musical-composition information comprises melody information, and the step of controlling the car lamp to exhibit the lamp-signal effect by using the corresponding light emitting region and lightening time periods according to the musical-composition information comprises:
according to the melody information, determining a duration of each of musical notes in the current music track; and
according to the duration, determining a lightening time period of each of the light emitting lamp beads.

6. The controlling method according to claim 3, wherein the controlling method further comprises:
according to the melody information, determining a pitch of the current music track;
according to the pitch, determining brightnesses of the light emitting lamp beads; and
controlling the light emitting lamp beads to exhibit the lamp-signal effect by using corresponding brightnesses.

7. The controlling method according to claim 1, wherein the controlling method further comprises:
determining whether a vehicle is in a predetermined state, to detect whether the vehicle satisfies a triggering condition for exhibiting the lamp-signal effect; and
when the triggering condition is satisfied, acquiring the musical-composition information of the current music track.

8. The controlling method according to claim 1 or 7, wherein the controlling method further comprises:
determining whether the current music track has a preset lamp-signal effect;
when the current music track has the preset lamp-signal effect, exhibiting the preset lamp-signal effect; and
when the current music track does not have the preset lamp-signal effect, acquiring the musical-composition information of the current music track.

9. A controlling device of a car lamp, **characterised in that** the controlling device comprises:
an acquiring module configured for acquiring musical-composition information of a current music track; and
a controlling module configured for controlling the car lamp to exhibit a lamp-signal effect by using corresponding light emitting region and lightening time periods according to the musical-composition information.

10. one or more nonvolatile computer-readable storage mediums storing a computer program, **characterised in that** when the computer program is executed by one or more processors, the computer program implements the controlling method of a car lamp according to any one of claims 1-8.
